Europäisches Patentamt

European Patent Office

Office européen des brevets

(11) Veröffentlichungsnummer: **0 332 069**
**A2**

## (12) EUROPÄISCHE PATENTANMELDUNG

(21) Anmeldenummer: 89103740.0

(22) Anmeldetag: 03.03.89

(51) Int. Cl.4: **B29C 65/64** , **B29C 65/48** , **F16C 7/00**

(30) Priorität: 11.03.88 DE 3808069

(43) Veröffentlichungstag der Anmeldung:
13.09.89 Patentblatt 89/37

(84) Benannte Vertragsstaaten:
AT BE CH DE ES FR GB IT LI NL SE

(71) Anmelder: BASF Aktiengesellschaft
Carl-Bosch-Strasse 38
D-6700 Ludwigshafen(DE)

(72) Erfinder: Schuermann, Helmut
Burgunderstrasse 13
D-6701 Maxdorf(DE)

(54) Verfahren zum Verbinden eines Faserkunststoffrohres mit wenigstens einem metallischen Anschlusselement.

(57) Zum Verbinden eines Faserkunststoffrohres mit einem metallischen Anschlußelement wird das auf seiner äußeren Mantelfläche umfangsmäßig verteilte Ausnehmungen und/oder Mitnehmer aufweisende Anschlußelement axial auf das vorgefertigte Faserkunststoffrohr aufgeschoben, wobei gleichzeitig Rohrmaterial in die Ausnehmungen hineingepreßt wird bzw. der oder die Mitnehmer in die Rohrwand einschneiden. Zwecks Erzielung größerer radialer Anpreßkräfte der Verbindung Faserkunststoffrohr-Anschlußelement wird vor dem Aufschieben des Anschlußelements das Faserkunststoffrohr im Anschlußbereich auf eine Temperatur oberhalb der Glasumwandlungstemperatur des Kunststoffs erwärmt.

EP 0 332 069 A2

## Verfahren zum Verbinden eines Faserkunststoffrohres mit wenigstens einem metallischen Anschluß-element

Die Erfindung bezieht sich auf ein Verfahren zum Verbinden eines Faserkunststoffrohres mit wenigstens einem metallischen Anschlußelement, bei dem das auf seiner äußeren Mantelfläche umfangsmäßig verteilte Ausnehmungen und/oder Mitnehmer aufweisende Anschlußelement mit dem vorge-fertigten Faserkunststoffrohr durch axiales Auf-schieben auf dieses bei gleichzeitigem Hineinpressen des Rohrmaterials in die Ausnehmungen bzw. Einschneiden der Mitnehmer in das Rohr form- und kraftschlüssig verbunden wird.

Aus der DE-OS 29 11 213 ist es bekannt, eine durch ein Faserkunststoffrohr gebildete Hohlwelle bereits beim Wickeln derselben mit einem Anschlußelement zu versehen, und die drehfeste Verbindung zwischen Anschlußelement und Welle dadurch herzustellen, daß das Anschlußelement mit gegen die innere Mantelfläche der Hohlwelle gerichteten und in deren Achsrichtung verlaufenden Ausnehmungen versehen wird. In diese Ausnehmungen werden beim Wickeln der Welle Teile derselben hineingedrückt, indem zwischen die Wickel-lagen entsprechend den Ausnehmungen vorgefer-tigte starre Segmente eingelegt und diese nachfolgend überwickelt werden. Nachteilig bei einer derartigen Anschlußverbindung ist die aufwendige und teure Herstellung. Das Verbinden des Faserkunststoffrohres mit Anschlußelementen ist in den Herstellungsprozeß mit eingebunden und bedingt somit jeweils ein Wickeln der Welle in festgelegten Längen. Darüber hinaus ist das Einlegen der starren Segmente schwierig und erfordert großes handwerkliches Geschick.

Weiterhin beschreibt die DE-PS 30 07 896, von der zur Darstellung der Erfindungs-Gattung im Oberbegriff des Anspruchs 1 angegangen ist, eine Anschlußverbindung für durch Faserkunststoffrohre gebildete Hohlwellen, bei der ein Mitnehmer in Form von Schneidzähnen tragendes Anschlußelement durch axiales Aufschieben mit dem Faserkunststoffrohr verbunden wird. Dabei wird, um Rißbildung durch den entstehenden Innendruck zu ver-meiden, das Faserkunststoffrohr im Anschlußbe-reich zwischen dem Anschlußelement und einem metallischen Stützring eingeschlossen. Ein derartiger Aufbau befriedigt jedoch nicht in jeder Hinsicht, da durch den Metallring das Gewicht und der Außendurchmesser der Hohlwelle vergrößert werden, was häufig unerwünscht ist. Außerdem kann sich infolge der verschiedenen Wärmeausdehnungskoeffizienten von Metall-Stützring und Faserkunststoffrohr der Metallring bei niedrigen Temperaturen lösen, wodurch die Qualität der Anschlußverbindung erheblich gemindert wird.

Mit der Erfindung soll ein Verfahren geschaffen werden, mit dem es möglich ist, ein Faserkunststoffrohr mit einem metallischen Anschlußelement ohne zusätzliche Bauteile und ohne Minderung der Festigkeitswerte dauerhaft zu verbinden.

Diese Aufgabe wird bei einem Verfahren der eingangs bezeichneten Art dadruch gelöst, daß vor dem Aufschieben des Anschlußelements das Faserkunststoffrohr im Anschlußbereich auf eine Temperatur oberhalb der Glasumwandlungstemperatur des Kunststoffs erwärmt wird.

Durch die Erwärmung des Faserkunststoffroh-.res wird der Kunststoff in den entropieelastischen Zustand überführt, sein Modul sinkt sehr stark ab. Das Faserkunststoffrohr wird damit verformungsfähiger und es lassen sich größere Dehnungen erreichen, ohne daß es zu Rißbildungen in der Rohrwand kommt, d.h. es sind größere Aufweitungen des Faserkunststoffrohres beim Einpressen des Anschlußelementes möglich. Insgesamt hat sich eine Erwärmung des Rohres auf eine Temperatur von etwa 0°C bis etwa 10°C oberhalb der Glas-umwandlungstemperatur des Kunststoffes als be-sonders vorteilhaft erwiesen.

Bei der nachfolgenden Abkühlung steigt die radiale Anpreßkraft der Verbindung Faserkunststoffrohr-Anschlußelement und es können auch hohe Drehmomente im Dauerbetrieb übertragen werden. Eine weitere Verbesserung in diesem Sinne läßt sich durch eine entsprechende Oberflächenrauhigkeit der Paarung Faserkunststoffrohr-Anschlußelement erreichen. Diese kann beispielsweise dadurch eingestellt werden, daß die Paarungsflächen durch Sandstrahlen aufgerauht werden, oder daß auf die äußere Mantelfläche des Anschlußelementes eine Rändelung aufgebracht wird. Schließlich kann die Mantelfläche des Anschlußelements auch polygonförmig ausgebildet sein.

Im allgemeinen ist die Faserorientierung des Faserkunststoffrohres im Anschlußbereich so gewählt, daß der Innendruck beim Einpressen des Anschlußelements auch ohne den Kunststoff, also allein durch die Fasern aufgenommen werden kann. Als Fasern kommen zweckmäßigerweise solche aus Glas, Kohlenstoff oder Kunststoff in Betracht. Es können auch Gemische aus diesen Fasern verwendet werden. Für die Faserkunststoffrohre eignen sich sowohl thermoplastische Kunststoffe als auch duromere Kunststoffe, insbesondere Epoxid-, Polyester oder Vinylesterharze.

Nach einem weiteren Merkmal der Erfindung wird auf das Anschlußelement nicht-ausgehärteter Kunststoff oder Klebstoff aufgebracht. Hierdurch kann eine besonders innige Verbindung zwischen Faserkunststoffrohr und Anschlußelement erreicht werden, und es können besonders hohe Drehmomente übertragen werden.

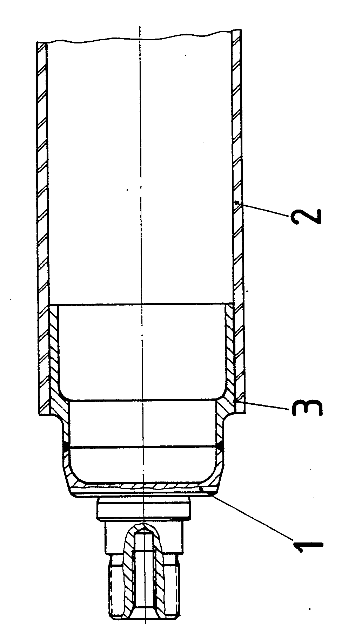

Die Erfindung wird nachfolgend unter Hinweis auf die Zeichnung anhand eines Ausführungsbeispiels näher erläutert.

In der Zeichnung ist das Anschlußelement mit (1), das Faser-Kunststoffrohr mit (2) und eine Klebstoff-Zwischenschicht mit (3) bezeichnet. Bei dem Faser-Kunststoffrohr kann es sich z.B. um die Kardanwelle eines Kraftfahrzeuges handeln.

Das Faser-Kunststoffrohr ist den Beanspruchungen aus Torsionsmoment und Biegebeanspruchung entsprechend aufgebaut. Bevorzugte Faserorientierungswinkel im Bereich des Anschlußelementes liegen zwischen $\pm 45°$ und $90°$ zur Rohrlängsachse. Das Anschlußelement wird hinsichtlich des Innendurchmessers des Faser-Kunststoffrohres mit Übermaß hergestellt, d.h. der Außendurchmesser des Anschlußelementes ist größer als Innendurchmesser des Faser-Kunststoffrohres. Die Oberfläche des Anschlußelementes wird z.B. mit einer Rändelung nach DIN 82 versehen.

Die Erwärmung des Rohres auf eine Temperatur um oder knapp oberhalb T der Kunststoffmatrix erfolgt durch IR-Strahler oder Heißluft. Vorteilhaft ist es, das Rohr dabei zu drehen, so daß sich auf dem Rohrumfang eine gleichmäßige Temperaturverteilung einstellt. Es wird nur der Bereich erwärmt, in dem das Anschlußelement sitzen soll. Das Anschlußelement selber wird nicht erwärmt.

Die Kraft zum Einpressen des Anschlußelementes in das Faser-Kunststoffrohr kann vorteilhaft mittels Hydraulikzylindern aufgebracht werden, wobei darauf zu achten ist, daß Rohr und Anschlußelement beim Einpressen zueinander fluchtend geführt werden.

Eine zusätzliche Verklebung des Anschlußelementes mit dem Faser-Kunststoffrohr kann erzeugt werden, indem das Anschlußelement mit Klebstoff bestrichen oder in eine niedrigviskose Klebstoffpaste eingetaucht wird. Geeignet sind Epoxid- oder Acrylatklebstoffe. Die rasche Aushärtung des Klebstoffes wird durch den Kontakt mit dem Faser-Kunststoffrohr erreicht, das sich auf einer relativ hohen Temperatur $(T > T_g)$ befindet.

## Ansprüche

1. Verfahren zum Verbinden eines Faserkunststoffrohres mit wenigstens einem metallischen Anschlußelement, bei dem das auf seiner äußeren Mantelfläche umfangsmäßig verteilte Ausnehmungen und/oder Mitnehmer aufweisende Anschlußelement mit dem vorgefertigten Faserkunststoffrohr durch axiales Aufschieben auf dieses bei gleichzeitigem Hineinpressen des Rohrmaterials in die Ausnehmungen bzw. Einschneiden der Mitnehmer in das Rohr form- und kraftschlüssig verbunden wird, dadurch gekennzeichnet, daß vor dem Aufschieben des Anschlußelements das Faserkunststoffrohr im Anschlußbereich auf eine Temperatur oberhalb der Glasumwandlungstemperatur des Kunststoffs erwärmt wird.

2. Verfahren nach Anspruch 1, dadurch gekennzeichnet, daß auf das Anschlußelement nichtausgehärteter Kunststoff oder Klebstoff aufgebracht wird.